(19) Europäisches Patentamt
European Patent Office
Office européen des brevets

(11) **EP 4 130 731 A1**

(12) **EUROPEAN PATENT APPLICATION**

(43) Date of publication:
**08.02.2023 Bulletin 2023/06**

(51) International Patent Classification (IPC):
**G01N 27/9013** $^{(2021.01)}$    **G01N 27/90** $^{(1980.01)}$

(21) Application number: **22382564.7**

(52) Cooperative Patent Classification (CPC):
**G01N 27/902; G01N 27/9053**

(22) Date of filing: **10.06.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021 ES 202131632 U**

(71) Applicant: **Ideko, S.Coop.**
**20870 Elgoibar Guipuzcoa (ES)**

(72) Inventors:
• **LANZAGORTA BENGOCHEA, JOSE LUIS**
**20870 ELGOIBAR (GUIPUZCOA) (ES)**
• **AIZPURUA MAESTRE, IRATXE**
**20870 ELGOIBAR (GUIPUZCOA) (ES)**

(74) Representative: **Plasseraud IP**
**66, rue de la Chaussée d'Antin**
**75440 Paris Cedex 09 (FR)**

(54) **MACHINE FOR INSPECTING A RAILWAY VEHICLE AXLE USING EDDY CURRENTS**

(57)    The present invention relates to a machine for inspecting a railway vehicle axle using eddy currents comprising:
• an eddy current sensor with a coil, means for exciting the coil, a control unit for measuring the eddy current and determining the presence of cracks,
• a head with a mechanical arm at the end of which the eddy current sensor is found, configured for moving the sensor about the axle according to a forward movement parallel to the longitudinal axis of the axle during inspection, and
• rotation means to generate a rotational movement about the longitudinal axis thereof, such that during the inspection the sensor describes a helical inspection line;
and wherein the head is vertically movable to vary the distance between the sensor and the surface of the axle, and is configured to maintain the perpendicularity of the sensor with respect to the surface of the axle at the common radii.

FIG. 1

EP 4 130 731 A1

## Description

## Technical field

The present invention proposes a machine for automatically inspecting surface defects in railway vehicle axles using eddy currents for this purpose.

## State of the art

During the manufacturing process of railway axles, such as during the turning and grinding of railway vehicle axles, thermal and mechanical loads are generated that induce the appearance of defects (cracks) on the surface and subsurface of the axles.

The cracks can potentially grow over the useful life of the axles and cause premature failure. For this reason, it is absolutely necessary to have a system for detecting surface defects that guarantees safety in the manufacture of the axles.

For controlling the quality in the manufacture of axles, it is common to use non-destructive inspection techniques that allow the axle to be inspected without damaging it. The magnetic particle inspection method (MT method) is the most widely used in the industry for inspecting railway wheel and axle surfaces due to the standardisation thereof.

The MT method enables surface and subsurface discontinuities to be detected in ferromagnetic materials and is essentially based on applying magnetic particles to the axle and magnetising it, so that a grouping of particles is produced in the areas where there are cracks.

Although the MT method is easy to implement, it is practical for low-volume inspections, and it is standardised in the railway industry, it exhibits a problem mainly related to the volume of axles that can be inspected in a given time.

Thus, the MT method requires a long time for the application thereof and it is not easy to automate, so it is not very suitable for high-volume production. In addition, the use of magnetic particles produces important impacts from an environmental point of view. Furthermore, and more importantly, the rate of probability of detection (POD) of defects is limited, since it is a method basically dependent on the detection ability of the operator.

In order to increase and ensure a consistent probability of detection (POD) over time, inspection techniques using eddy currents (Foucault current) are beginning to be used in the railway sector, since it is a reliable, fast and practical inspection method, capable of inspecting complex shapes and with high production volumes.

This technique is based on placing an eddy current sensor at a certain distance (lift-off, LO) from the axle to be inspected. The eddy current sensor can consist, for example, of a first "exciter" coil that is positioned near the axle to be inspected and by means of an alternating current in the coil, a changing magnetic field is generated that interacts with the axle and generates an eddy current. Variations in the phase and magnitude of the eddy current are monitored with a second "receiver" coil, or by measuring the changes in the current flowing in the first "exciter" coil. The presence of metallurgical changes such as cracks in the axle causes a change in the eddy current and therefore a corresponding change in the phase and amplitude of the measured current.

The eddy current sensor can be a single-element sensor or a multi-element or Array sensor (configuration of several sensors in the same assembly covering a larger inspection area). For example, the article "*Eddy Current Array technology for the surface inspection of railway axles*" shows the use of an Array sensor for manually inspecting railway axles, while the article "*New inspection approaches for railway based on Eddy Current*" shows the use of an isotropic array sensor for manually inspecting railway axles.

"J.L.Lanzagorta1, R. Leclerc, E. Grondin, L.Lasa, A. Landaberea, X.Alzaga, "Eddy Current Array technology for the surface inspection of railway axles" 18th International Wheelset Congress. November 7-11,2016 Chengdu, China."

"J. Lanzagorta, J. Decitre, F. Nozais, I. Aizpurua, R. Hidalgo-Gato, I. Castro, L. Lasa, "New inspection approaches for railway based on Eddy Current.12th European Conference on Non-Destructive Testing (ECNDT 2018), June 11-15, 2018, Gothenburg, Sweden"

Although said articles show the use of eddy current technology for the inspection of axles, the method of inspection used is manual, and therefore depends on the operator performing the inspection. In addition, to correctly ensure the detection of cracks, it is necessary to make several manual passes of the sensor about the axle that is statically arranged.

Therefore, a machine is required that performs a method of inspection using eddy currents that optimises inspection time while ensuring the probability of detection (POD) of surface defects in railway axles.

## Object of the invention

According to the present invention, a machine is proposed for automatically inspecting railway vehicle axles using eddy currents. The invention enables the fully automatic inspection of axles for surface detection of defects (cracks) over the entire surface of the axle.

The inspection machine comprises:

- an eddy current sensor having at least one coil for inducing a current in the railway vehicle axle,
- means for electrically exciting the coil of the sensor to induce the current in the axle,
- a control unit for measuring the eddy current in the axle and determining the presence of cracks in the axle,
- a head comprising a mechanical arm at the end of which the eddy current sensor is arranged, the head configured for moving the sensor about the axle according to a forward movement parallel to the longitudinal axis of the axle during inspection, and

• rotation means to generate a rotational movement of the axle about the longitudinal axis thereof, such that during the inspection the sensor describes a helical-shaped inspection line about the axle;

the head of said machine being vertically movable to vary the distance between the sensor and the surface of the railway vehicle axle, and additionally the head being configured to maintain the perpendicularity of the sensor with the surface of the railway vehicle axle in the common radii.

In this way, cracks can be detected on the entire surface of the axle quickly and automatically, since the inspection does not have to be carried out manually by an operator, and therefore possible human errors due to the intervention of the operator are also avoided.

The inspection is preferably carried out by maintaining a constant distance from the surface of the axle, so that the control unit controls the vertical movement of the sensor to adapt to changes in the diameter of the railway vehicle axle. This arrangement ensures that the sensor reaches the required position to detect possible defects while maintaining perpendicularity with the surface of the axle.

However, in this type of railway vehicle axles, the transition between diameter changes comprises common radii. These common radii are sensitive areas to the accumulation of efforts, so it is convenient to inspect them correctly. In these areas, the sensor maintains its distance with respect to the surface, however, the sensor is vertically positioned so that the inspection is not performed perpendicularly to the surface. To prevent the inspection from being inaccurate in this way, the head is preferably configured to maintain the perpendicularity of the sensor with the surface of the common radii of the railway vehicle axle, such that it is inspected more accurately, the cracks or material defects being detected more effectively if the sensor impinges perpendicular to the surface.

According to an alternative design, in order to maintain the perpendicularity, the head preferably comprises a mechanical arm that is pivotable with respect to an axis of rotation perpendicular to the longitudinal axis of the arm itself and perpendicular to the longitudinal axis of the railway vehicle axle. In this way, the machine control unit controls the pivoting of the mechanical arm so that it is positioned perpendicularly to the surface of the axle in the common radii, maintaining the sensor perpendicular to the surface of the axle throughout the inspection path thereof.

According to another design option, the sensor is preferably pivotable with respect to the mechanical arm according to an axis of rotation perpendicular to the longitudinal axis of the mechanical arm and perpendicular to the longitudinal axis of the railway vehicle axle, so that the perpendicularity of the sensor is maintained with respect to the surface of the axle throughout the inspection path.

According to an embodiment of the invention, the head is configured to rotate about its own axis, i.e., about the longitudinal axis of the mechanical arm for rotation of the sensor, modifying the inspection orientation of the sensor.

This configuration will be suitable when the sensor is not isotropic, in this manner it allows the inspection to be continuously carried out, at least two paths being carried out between the ends of the axle to be inspected and the sensor being rotated so that the inspection orientation is different in each path.

According to one embodiment of the invention, the sensor is preferably isotropic so that it is not required to have the previously mentioned sensor rotation configuration to change the orientation thereof, since it detects the cracks regardless of its orientation, which allows for the axis to be inspected carrying out a single outward path between the ends of the axle.

## Description of the figures

Figure 1 shows a schematic front view of the inspection machine of the invention.
Figure 2 shows a schematic side view of the machine of the preceding figure with an arrow indicating the direction of movement of the sensor head.
Figure 3 shows a partial schematic view of a railway vehicle axle.
Figure 4 shows a partial schematic view of a railway vehicle axle with a detail of the common radius, showing the positioning of the arm of the head in the common radius and in an advanced position of the axle outside said common radius.
Figure 5 shows a partial schematic view of a railway vehicle axle with a detail of the common radius, showing the positioning of the sensor in the common radius and in an advanced position of the axle outside said common radius.

## Detailed description of the invention

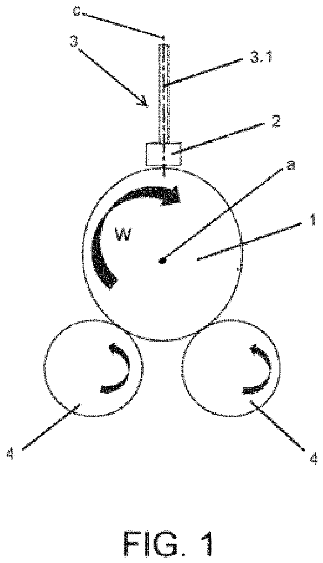

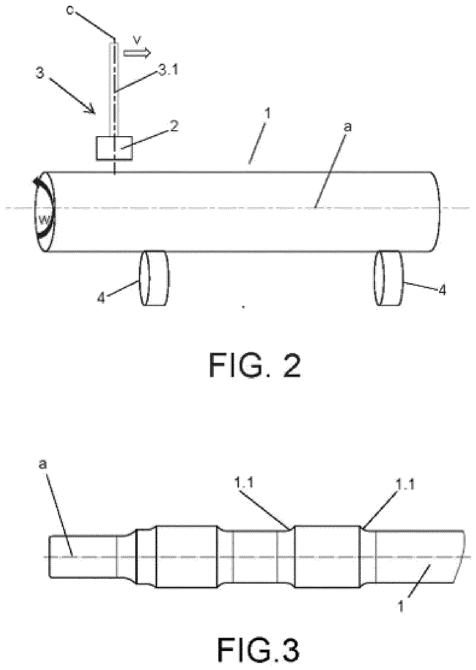

Figures 1 and 2 show a machine for automatically inspecting a railway vehicle axle (1) using eddy currents.

The machine comprises at least one eddy current sensor (2) having at least one coil for inducing a current in the axle (1), means for electrically exciting the coil of the sensor (2) to induce the current in the axle (1), such as for example an alternating current source, and a control unit for measuring the eddy current in the axle (1) and determining the presence of cracks in the axle (1).

By means of the alternating current in the coil, a changing magnetic field is generated that interacts with the axle (1) and generates the eddy current. Variations in the phase and magnitude of the eddy current are monitored in the control unit. Said variations can be detected by measuring the changes in the current flowing in the coil of the sensor (2), which works by way of an exciter coil, or by using a second coil, which can be arranged in the sensor (2), and which works as a receiver coil. The presence of metallurgical changes, caused by the existence of cracks in the axle (1), causes a change in the eddy current and a corresponding change in the phase and amplitude of the measured current.

The eddy current sensor (2) is arranged in a head (3) that is adapted to generate at least one forward movement (v) of the sensor (2) parallel to the surface of the axle (1). The machine additionally comprises rotation means (4) to cause a rotational movement (w) of the axle (1) to be inspected about the longitudinal axis (a) thereof.

The head (3) preferably comprises a mechanical arm (3.1) carrying the sensor (2) at the free end thereof, a transfer runner, or other similar means adapted to automatically move the sensor (2) according to the forward movement (v) parallel to the surface of the axle (1).

The rotation means (4) are rollers on which the axle (1) rests. As can be seen in the figures, two pairs of rollers are used between which the axle (1) rests, each of these two pairs being arranged at one end of the axle (1). Alternatively, the rotation means (4) can be clamps that secure the axle (1) by the ends thereof, such as the plates of a lathe, or other similar means that enable the rotation of the axle (1) about the longitudinal axis (a) thereof leaving at least the upper portion of the axle free for the advancement and inspection of the sensor (2).

The invention proposes using the machine to carry out an automatic inspection by means of two simultaneous movements of the sensor (2) and of the axle (1). Thus, the sensor (2) moves vertically about the axis (1) maintaining its perpendicularity according to the forward movement (v) parallel to the surface of the axle (1), and the axle (1) moves according to the rotational movement (w) about the longitudinal axis (a) thereof. In this way, the axle (1) rotates while the sensor (2) moves about the axle (1) following a straight line between the ends of the axle (1) maintaining a constant distance from the axle (1) throughout the inspection. Thus, during the inspection, the sensor (2) describes a substantially helical-shaped inspection line about the axle (1) that enables the presence of cracks to be detected on the entire surface of the axle (1) and without requiring manual intervention by an operator.

The eddy current sensor (2) can be a single-element sensor or a multi-element sensor (Array type).

Preferably, the eddy current sensor (2) is an isotropic sensor, i.e., it is a sensor the detection of which does not depend on the orientation of the cracks. The shape and configuration of the sensor is not the object of the present invention, any type of known isotropic sensor being able to be used in such case, such as, for example, the sensors described in the scientific publications indicated in the section about the state of the art. Article "*Eddy Current Array technology for the surface inspection of railway axles*" or article "*New inspection approaches for railway based on Eddy Current*". Thus, it can be an isotropic array sensor, or a set of sensors strategically arranged so that there is no dependency on the orientation of the crack.

When the eddy current sensor (2) is an isotropic sensor independent of the orientation of the cracks, the forward movement (v) of the eddy current sensor (2) is carried out according to a single outward path between the ends of the axle (1) to be inspected. In other words, to inspect the entire surface of the axle, it is sufficient to move the sensor (2) between the ends of the axle (1) only once while the axle (1) is rotated.

If an isotropic sensor is not used, i.e., a sensor that only detects cracks that are aligned with the orientation of maximum sensor inspection sensitivity, in such case, the forward movement (v) of the sensor (2) is carried out according to at least two paths between the ends of the axle (1) to be inspected, the sensor (2) being rotated so that the inspection orientation is different in each path. In other words, to inspect the entire surface of the axle, it is at least required to move the sensor (2) between the ends of the axle (1) a first time, after completing the first path, rotate the orientation of the sensor (2), and move the sensor (2) between the ends of the axle again. In this alternative design embodiment, the head (3) rotates about its own axis, i.e., about the axis (c) of the arm (3.1), the machine control unit controlling the rotation of the head (3) when the end of the travel is reached, and before starting the next path.

The forward movement (v) parallel to the surface of the axle (1) is preferably carried out according to a distance between the sensor (2) and the surface of the axle (1) of between 0-2 mm. This distance (LO; lift-off) is comprised in the interval 0-2 mm for the case in which there is no compensation for LO. If the sensor (2) used has LO compensation, the distance may be greater than 2mm, or may even vary during the inspection.

However, as is known, a distinctive feature of railway vehicle axles is that they comprise common radii in the transition between diameters. In this case, despite the fact that the machine is configured to move the head (3) vertically to vary the distance between the sensor (2) and the surface of the axle (1) even in said common radii (1.1), at these points the perpendicularity of the sensor (2) with respect to the surface of the axle (1) would be lost.

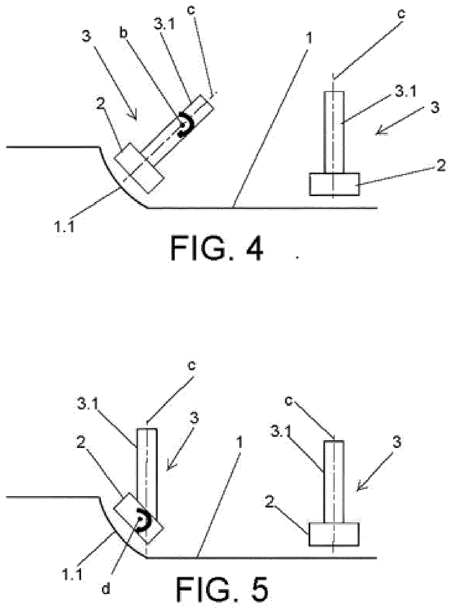

To solve this problem, as can be seen in figure 4, the head (3) comprises an arm (3.1) that is pivotable with respect to an axis of rotation (b) perpendicular to the longitudinal axis (c) of the mechanical arm (3.1) and perpendicular to the longitudinal axis (a) of the railway vehicle axle (1). In this way, once the geometric dimensions of the railway vehicle axle (1) to be inspected are entered into the machine, the control unit of the machine will control the inclination of the arm (3.1) to maintain the perpendicularity of the sensor (2) with respect to the surface of the axle (1) in the common radii (1.1). The arm (3.1) moves maintaining the verticality except in the common radii (1.1) wherein the arm (3.1) will incline following the configuration of the common radius (1.1). According to a design alternative, the parameters of the axle configuration are obtained by means of a sensor that detects the geometry of the axle (1) during the inspection path.

According to an alternative embodiment, as can be seen in Figure 5, instead of pivoting the arm (3.1), it is the sensor (2) itself that which pivots along an axis of rotation (d) perpendicular to the longitudinal axis (c) of the mechanical arm (3.1) and perpendicular to the longitudinal axis (a) of the railway vehicle axle (1), so that the perpendicularity of the sensor (2) is maintained with respect to the surface of the axle (1) throughout the entire path, even in the common radii (1.1).

Preferably, the rotational speed (w) of the axle (1) and the forward speed (v) of the sensor (2) are determined by the active diameter of the sensor (d) according to the following equation:

$$v = \frac{d * w}{2}$$

**Claims**

1. A machine for inspecting a railway vehicle axle (1) using eddy currents, comprising:

   • an eddy current sensor (2) having at least one coil to induce a current in the axle (1),
   • means for electrically exciting the coil of the sensor (2) to induce the current in the axle (1),
   • a control unit for measuring the eddy current in the axle (1) and determining the presence of cracks in the axle (1),
   • a head (3) comprising a mechanical arm (3.1) at the end of which the eddy current sensor (2) is arranged, the head (3) configured for moving the sensor (2) about the axle (1) according to a forward movement (v) parallel to the longitudinal axis (a) of the axle (1) during inspection, and
   • rotation means (4) to generate a rotational movement (w) of the axle (1) about the longitudinal axis (a) thereof, such that during the inspection the sensor (2) describes a helical-shaped inspection line about the axle (1);

   and wherein the head (3) is vertically movable to vary the distance between the sensor (2) and the surface of the railway vehicle axle (1), and wherein the head (3) is additionally configured to maintain the perpendicularity of the sensor (2) with respect to the surface of the axle (1) in the common radii (1.1).

2. The machine according to the preceding claim, wherein the mechanical arm (3.1) of the head (3) is pivotable with respect to an axis of rotation (b) perpendicular to the longitudinal axis (c) of the mechanical arm (3.1) and perpendicular to the longitudinal axis (a) of the railway vehicle axle (1) to maintain the perpendicularity of the sensor (2) with respect to the surface of the axle (1) in the common radii (1.1).

3. The machine according to claim 1, wherein the sensor (2) is pivotable with respect to the mechanical arm (3.1) according to an axis of rotation (d) perpendicular to the longitudinal axis (c) of the mechanical arm (3.1) and perpendicular to the longitudinal axis (a) of the railway vehicle axle (1) to maintain the perpendicularity of the sensor (2) with respect to the surface of the axle (1) in the common radii (1.1).

4. The machine according to any one of the preceding claims, wherein the head (3) is configured to rotate about its own axis (c) to rotate the sensor (2) and modify the inspection orientation of the sensor (2).

5. The machine according to any one of claims 1 to 3, wherein the eddy current sensor (2) is an isotropic sensor independent of the orientation of the cracks, wherein the forward movement (v) of the eddy current sensor (2) is carried out according to a single one-way path between the ends of the axle (1) to be inspected.

6. The machine according to any one of the preceding claims, wherein the control unit is configured to move the head (3) vertically, maintaining a constant distance of between 0-2mm between the sensor (2) and the surface of the axle (1).

7. The machine according to any one of the preceding claims, wherein the eddy current sensor (2) is a single-element sensor or a multi-element sensor.

FIG. 1

FIG. 2

FIG.3

FIG. 4

FIG. 5

Europäisches
Patentamt

European
Patent Office

Office européen
des brevets

## EUROPEAN SEARCH REPORT

Application Number

EP 22 38 2564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 864 239 A (CASARCIA DOMINICK A [US] ET AL) 5 September 1989 (1989-09-05) | 1-3,6 | INV. G01N27/9013 G01N27/90 |
| Y | * figures 2, 3, 4, 6, 7 * <br> * column 3, paragraph 1 * <br> * abstract * <br> * column 2, paragraph 6 – column 3, paragraph 1 * <br> ----- | 4,5,7 | |
| Y | EP 3 594 676 A1 (WESTERTON ACCESS LTD [GB]) 15 January 2020 (2020-01-15) <br> * figure 3 * <br> ----- | 4 | |
| Y | LANZAGORTA J L ET AL: "New ways to inspect railway axles: From simulation to experimental validation", <br> NDT&E INTERNATIONAL, ELSEVIER, AMSTERDAM, NL, <br> vol. 121, 28 March 2021 (2021-03-28), XP086607495, <br> ISSN: 0963-8695, DOI: 10.1016/J.NDTEINT.2021.102439 <br> [retrieved on 2021-03-28] <br> * abstract * <br> * figure 2 * <br> * Section 2.2 * <br> ----- | 5,7 | TECHNICAL FIELDS SEARCHED (IPC) <br><br> G01N |

The present search report has been drawn up for all claims

| Place of search | Date of completion of the search | Examiner |
|---|---|---|
| Munich | 18 November 2022 | Knoll, Stephan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 38 2564

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2022

| Patent document cited in search report | | Publication date | Patent family member(s) | Publication date |
|---|---|---|---|---|
| US 4864239 | A | 05-09-1989 | NONE | |
| EP 3594676 | A1 | 15-01-2020 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.L.LANZAGORTA1 ; R. LECLERC ; E. GRONDIN ; L.LASA, A. LANDABEREA ; X.ALZA- GA.** Eddy Current Array technology for the surface inspection of railway axles. *18th International Wheel- set Congress,* 07 November 2016

- **J. LANZAGORTA ; J. DECITRE ; F. NOZAIS ; I. AIZPURUA ; R. HIDALGO-GATO ; I. CASTRO ; L. LASA.** New inspection approaches for railway based on Eddy Current. *12th European Conference on Non-Destructive Testing (ECNDT 2018),* 11 June 2018